# FASCICULE DE BREVET EUROPEEN

(11) **EP 2 877 965 B1**
(45) Date de publication et mention de la délivrance du brevet: **27.06.2018**
(21) Numéro de dépôt: 13750655.6
(22) Date de dépôt: 24.07.2013
(51) Int. Cl.: G06K 19/077

(54) **MODULE ÉLECTRONIQUE POUR CARTE À PUCE ET CIRCUIT IMPRIMÉ POUR LA RÉALISATION D'UN TEL MODULE**
ELEKTRONISCHES MODUL FÜR EINE CHIPKARTE UND GEDRUCKTE SCHALTUNG ZUR ERZEUGUNG EINES SOLCHEN MODULS
ELECTRONIC MODULE FOR CHIP CARD AND PRINTED CIRCUIT PRODUCING SUCH A MODULE

(30) Priorité: 25.07.2012 FR 1202109
(43) Date de publication de la demande: 03.06.2015
(73) Titulaire: Linxens Holding, 78200 Mantes-la-Jolie (FR)
(72) Inventeur: PROYE, Cyril, F-78200 Magnanville (FR); GUILLEMAIN, Roland, F-92150 Suresnes (FR)
(74) Mandataire: GIE Innovation Competence Group
(86) Numéro de dépôt international: PCT/EP2013/065596
(87) Numéro de publication internationale: WO 2014/016332

(56) Documents cités:
- EP-A1- 0 919 950
- WO-A1-97/26621
- FR-A1- 2 765 010

## Description

L'invention concerne le domaine des modules électroniques pour cartes à puce.

Les cartes à puce ont de multiples usages : cartes de crédit, carte SIM pour téléphones portable, cartes de transport, cartes d'identité, etc.

Ces cartes sont généralement constituées d'un support rigide, par exemple en matière plastique, constituant l'essentiel de la carte, dans lequel est incorporé un module électronique fabriqué séparément. Ce module électronique comporte par exemple un circuit imprimé flexible muni d'une puce (circuit intégré) et de moyens de connexion de la puce à un dispositif permettant de lire et/ou d'écrire des données dans la puce.

L'invention concerne en particulier le domaine des cartes dites « Dual », c'est-à-dire ayant une double interface de communication avec la puce. On parle aussi de cartes avec et sans contacts, ou de cartes « Combi ».

Pour une utilisation « avec contacts», les contacts sont reliés à la puce et affleurent sur une face du module pour permettre une connexion électrique à un dispositif de lecture et/ou écriture, lors de l'introduction de la carte dans ce dispositif.

Pour une utilisation « sans contacts », il existe deux types de cartes Dual.

Selon le premier type de carte, une antenne RFID est directement physiquement électriquement connectée à la puce. Dans ce cas, la puce peut échanger des données avec un dispositif de lecture/écriture, soit en réalisant une connexion électrique directe entre le dispositif de lecture/écriture et les contacts du module, soit en réalisant un couplage électromagnétique direct entre l'antenne et le dispositif de lecture/écriture.

Selon le deuxième type de carte, une première antenne RFID, dite « antenne de module » est intégrée dans le module et permet un couplage électromagnétique (donc sans liaison physique) avec une deuxième antenne, dite « antenne booster ou master », incorporée dans le support rigide de la carte mentionné plus haut. La première antenne est plus petite que la deuxième antenne. Cette deuxième antenne, ayant des dimensions analogues à celles de la carte, permet d'obtenir une portée de communication appropriée. Dans ce cas aussi, la puce peut échanger des données avec un dispositif de lecture/écriture, soit en réalisant une connexion électrique directe entre le dispositif de lecture/écriture et les contacts du module, soit en réalisant un couplage électromagnétique entre l'antenne de module et l'antenne booster d'une part, et l'antenne booster et le dispositif de lecture/écriture d'autre part. L'antenne du module communique (avec un effet de résonance) ainsi avec un dispositif de lecture et/ou écriture, par l'intermédiaire de l'antenne booster. Donc les seules connexions physiques dans ce deuxième type de cartes Dual, sont seulement au niveau du module, entre la puce et l'antenne de module. On évite ainsi d'avoir à réaliser un contact électrique direct entre l'antenne incorporée dans la carte et la puce incorporée au module.

On connaît ainsi, grâce au document WO2007026077, des modules comprenant un circuit imprimé flexible avec une face avant supportant des contacts et une face arrière supportant la puce et l'antenne du module. Des trous (aussi appelés « puits » ou « vias ») sont alors réalisés dans le circuit imprimé, puis la paroi interne de ces trous est métallisée pour connecter électriquement les faces avant et arrière du module et relier ainsi les contacts à la puce et aux deux extrémités de l'antenne du module. Comme on peut le voir au niveau des références 19 de la figure 2 du document WO2007026077, ces trous sont, en général dans l'état de l'art, « débouchants ». C'est-à-dire qu'ils traversent non seulement le circuit imprimé, mais aussi les contacts pour déboucher sur la face avant.

D'autre part, le document WO 97/26621 A1 divulgue un module électronique pour une carte à puce hybride avec une antenne embarquée se couplant à une antenne booster sur la carte. L'antenne du module a entre 6 et 50 spires, la largeur du fil est comprise entre 50 et 300 microns et l'espacement entre spires est entre 50 et 200 microns. Afin de faciliter l'intégration du module dans la carte, l'antenne doit être contenue dans un module dont des dimensions sont définies par la norme ISO 7816-2. Pour être opérationnelle, l'antenne du module ne peut être complètement recouverte par une couche métallique, notamment lorsque celle-ci est située sur la face avant du module. A ceci s'ajoute le fait qu'il faut prévoir sur la face arrière du module une zone pour poser la puce, des zones pour les trous métallisés, une zone avec des plots (aussi appelés « pads » selon la terminologie anglo-saxonne) pour la connexion du circuit intégré aux contacts et à l'antenne. De plus, il est connu dans l'état de l'art qu'il faut que les spires de l'antenne soient réalisées avec une certaine largeur et une distance minimale entre les spires pour obtenir les caractéristiques électromagnétiques voulues.

Toutes ces contraintes rendent donc les nouveaux dessins d'antenne très compliqués à concevoir et chers à fabriquer.

Néanmoins, le demandeur a souhaité inventer un nouveau module permettant d'obtenir les performances électromagnétiques requises pour les applications mentionnées plus haut, tout en autorisant une simplification éventuelle du procédé de fabrication de ce module.

A cet effet, il a été conçu selon l'invention un module électronique pour carte à puce comprenant les dispositions suivantes. Il comporte une puce et une double interface de communication avec cette puce. Cette interface comprend ainsi elle-même au moins deux contacts et une antenne de module. Par exemple le nombre de contacts est six. Le module comprend un circuit imprimé (flexible ou non) avec deux faces principales : une face avant et une face arrière opposées l'une à l'autre. L'une des interfaces de communication est située sur la face avant. L'autre interface de communication est située sur la face arrière. La face avant supporte les contacts et la face arrière supporte l'antenne de module. La face arrière comprend également une zone destinée à recevoir la puce. L'antenne de module comporte au moins une spire réalisée sous forme d'une piste conductrice s'étendant entre deux extrémités. Le module selon l'invention est caractérisé par le fait que l'extrémité de la spire la plus externe est située à une distance de la zone destinée à recevoir la puce inférieure à 250 µm. En outre, au moins une spire de l'antenne passe entre cette extrémité et la zone du module destinée à recevoir la puce. De plus, l'antenne s'étend totalement en dehors de la zone destinée à être recouverte par la puce. Ainsi selon l'invention, les spires de l'antenne de module sont constituées d'une piste conductrice dont la largeur est moindre que celle habituellement préconisée pour ce type d'application. En réduisant la largeur de la piste conductrice, il est aussi possible de réduire la distance entre les spires, ainsi que le nombre de spires.

A l'encontre des préjugés de l'homme du métier, les performances requises pour ce type d'application ont pu être obtenues. En outre, il a été possible de ramener l'une des extrémités de l'antenne à proximité de la zone destinée à être recouverte par la puce, permettant ainsi d'éviter d'avoir à réaliser des trous métallisés et ceci même en ayant des trous borgnes (aussi appelés « non-débouchants »), comme ce sera expliqué plus loin.

L'antenne est par exemple constituée d'une piste conductrice, telle qu'une piste métallique. Ainsi, il peut s'agir d'une piste de cuivre réalisée par gravure d'une couche de cuivre préalablement électrodéposée, à travers un motif défini par photo-lithogravure. Ce type de procédé de gravure est bien connu et ne sera pas davantage décrit dans cette demande. Selon l'invention, cette piste qui a une largeur *l* et qui s'allonge sur *n* spires, avec une distance *d* entre deux spires consécutives, satisfait la relation *l x n* + *d* x (*n*-1)= ≤ 250 µm, avec n≥1. Même si comme indiqué précédemment, le procédé de réalisation d'une antenne par électrodéposition et photo-lithogravure est bien connu, il est particulièrement inhabituel d'envisager de faire une piste conductrice de si faible largeur pour réaliser une antenne, notamment avec les paramètres suivants : *l* préférentiellement compris entre 30 et 70 µm et plus préférentiellement substantiellement égal à 40 µm *n* préférentiellement compris entre 1 et 6 spires et plus préférentiellement encore égal à 5 et *d* préférentiellement compris entre 30 et 70 µm et plus préférentiellement substantiellement égal à 30 µm. Alors que dans les modules de l'art antérieur pour cartes Dual, *l* est compris entre 100 µm et 200µm, *d* est également compris entre 100 et 200 µm et *n* = 7, 8, 11 ou 12.

L'invention permet alors de rapprocher les extrémités de l'antenne de la zone destinée à recevoir la puce. Il devient donc possible d'utiliser une technologie à trous borgnes, ouverts sur la face arrière et bouchés sur la face avant par les contacts, pour connecter directement (sans métallisation de la paroi des trous borgnes) la puce par des fils métalliques aux contacts, à travers ces trous borgnes. Cette disposition dispense de faire des trous métallisés comme enseigné dans le document WO2007026077.

L'invention concerne aussi un circuit imprimé pour la réalisation d'un module selon l'invention.

D'autres caractéristiques et avantages de l'invention apparaîtront à la lecture de la description détaillée et des dessins annexés sur lesquels :
La figure 1 représente schématiquement en perspective une carte à puce comportant un exemple de module selon l'invention ;
La figure 2 représente schématiquement en perspective la face avant du module de la carte à puce de la figure 1 ;
La figure 3 représente schématiquement de manière détaillée les pistes conductrices réalisées sur la face avant du module représenté sur la figure 2 ;
La figure 4 représente schématiquement en perspective la face arrière du module de la carte à puce de la figure 1 ;
La figure 5 représente schématiquement de manière détaillée les pistes conductrices réalisées sur la face arrière du module représenté sur la figure 4 ;
La figure 6 représente schématiquement en coupe la structure du circuit imprimé du module représenté sur les figures 1, 2 et 4 ;
La figure 7 représente schématiquement un agrandissement d'une zone de la face arrière du module, telle que représentée sur la figure 5 ;
La figure 8 représente schématiquement de manière détaillée la superposition des pistes conductrices des faces avant et arrière du module représentées sur les figures 3 et 5;
La figure 9 représente schématiquement un exemple de système d'antennes de module et de carte, destiné à être monté dans la carte représentée sur la figure 1 ;
La figure 10 correspond à un diagramme représentant l'absorption d'une onde électromagnétique par le système d'antenne de la figure 9, en fonction de la fréquence.

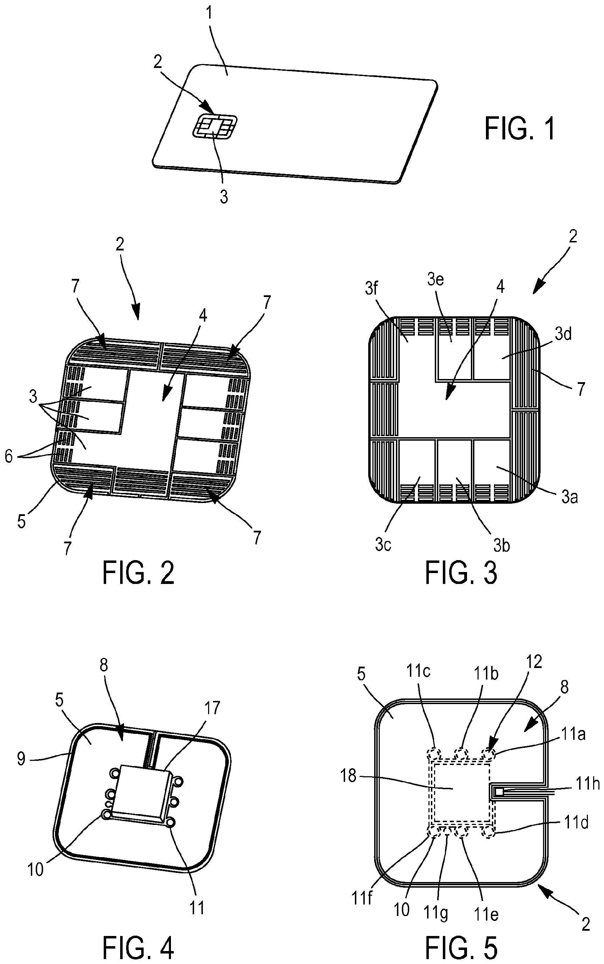

La figure 1 représente un carte à puce 1 comportant un module électronique 2 selon l'invention. Lorsque le module 2 est intégré dans la carte, des contacts 3 affleurent à la surface de la carte pour permettre une connexion électrique avec un lecteur de carte (non représenté).

Le module 2 est représenté séparément sur la figure 2, vu par sa face avant 4. Les contacts 3 sont réalisés sur un substrat flexible 5 (substrat pour circuit imprimé). Les extrémités des contacts 3 sont pourvues d'ouvertures 6 qui, comme ce sera expliqué plus loin, permettent un meilleur passage du flux magnétique généré ou détecté par l'antenne du module. D'autres ouvertures 6 sont ménagées dans des zones périphériques 7 métallisées du module 2. Les dimensions du module 2 et des contacts 3 sont définies par la norme ISO 7816-2.

La face avant 4 est représentée de manière plus détaillée sur la figure 3. On peut y voir que le module 2 comporte en face avant 4, six contacts 3a-3f. Les ouvertures 6 des extrémités des contacts 3a-3f et des zones périphériques 7 ont une largeur de 150 µm par exemple. La fonction des zones périphériques 7 n'est pas de réaliser des contacts, mais plutôt de rigidifier le module 2. Ces zones périphériques 7 ont également une fonction esthétique en donnant le même aspect métallisé sur l'ensemble de la face avant 4 du module 2. Ces zones périphériques 7 permettent aussi que les lames de contact électrique d'un lecteur de carte glissent sur une surface substantiellement au même niveau sur l'ensemble de la face avant, évitant ainsi que les contacts 3 ne soient arrachés lors de l'insertion ou de l'extraction de la carte dans le lecteur.

La figure 4 représente le même module 2 vu par sa face arrière 8. Sur cette face arrière 8 sont réalisées une antenne de module 9 et une piste de connexion 10. Cette face arrière reçoit également un circuit intégré 17. La face arrière 8 est représentée de manière plus détaillée sur la figure 5.

L'antenne 9 s'étend sur la face arrière 8 du module 2, essentiellement en périphérie de celui-ci. La piste de connexion 10 entoure et connecte des zones de connexion 11. Chaque zone de connexion 11 comporte un trou borgne 12.

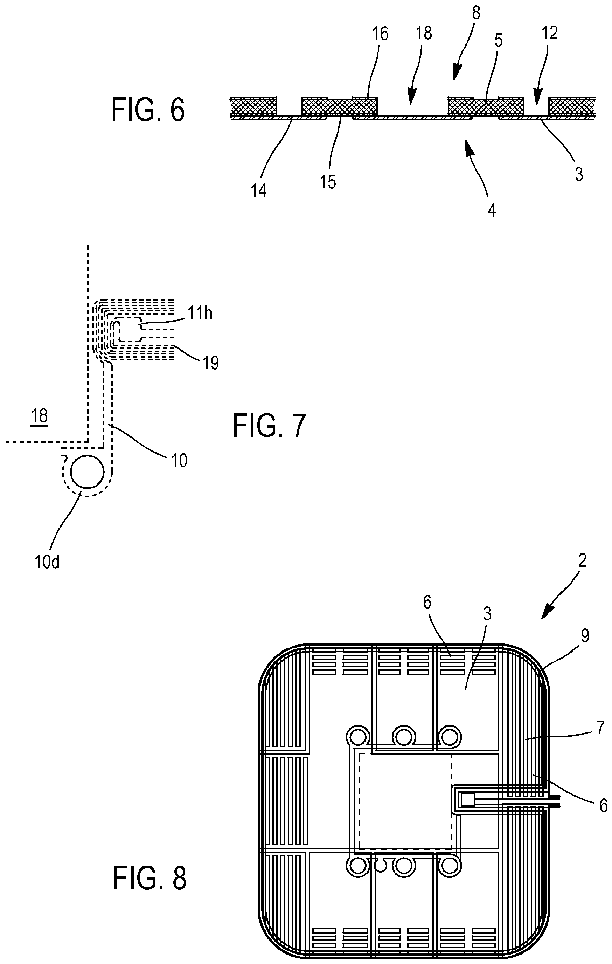

Comme représenté sur la figure 6, un trou borgne 12 consiste en une perforation du substrat flexible 5, fermée d'un côté par un contact. Autrement dit, la face arrière d'un contact 3 forme le fond d'un trou borgne 12. En effet, de manière connue en soi, le module 2 est réalisé par lamination d'une première couche métallique 14 (de cuivre par exemple) et d'un substrat flexible 5 (de verre-epoxy par exemple) avec une couche d'adhésif 15 intercalée entre les deux. La première couche métallique 14 se trouve alors sur la face avant 4 du module 2 tandis que la face arrière 8 reçoit une deuxième couche métallique 16 (cuivre dit « électrodéposé » par exemple) grâce à une technologie analogue. D'autres métallisations de nickel, d'or, etc. peuvent être réalisées par électrodéposition sur les première et deuxième couches métalliques 14, 16 pour en améliorer la conductivité, la résistance à la corrosion et l'aspect esthétique.

Revenant aux figures 4 et 5, on peut voir que la piste de connexion 10 s'étend sur le pourtour d'une zone ou aire 18 destinée à recevoir la puce 17. La zone 18 peut correspondre à une aire directement située sur la surface de la face arrière 8 du substrat 5 comme représenté sur les figures 4 et 5. Selon une variante de l'invention, la zone 18 peut correspondre à une cavité découpée dans l'épaisseur du substrat 5 (constituant avec les première et deuxième couches de cuivre un circuit imprimé) comme représenté sur la figure 6. La piste de connexion 10 forme par exemple substantiellement un carré et connecte électriquement sept zones de connexion 11. Les sept zones de connexion 11 sont disposées sous forme de deux rangées de trois zones de connexion 11 (11a, 11b, 11c et 11d, 11e, 11f respectivement) correspondant à deux rangées opposées du carré, plus une septième zone de connexion 11g disposée entre les zones de connexion 11e et 11f. La zone de connexion 11g constitue une plage soudure (comme ce sera expliqué plus loin). Une huitième zone de connexion 11h, indépendante de la piste de connexion 10 est disposée sensiblement au milieu d'un côté du carré joignant ces deux rangées. La zone de connexion 11h constitue une autre plage soudure (comme ce sera également expliqué plus loin). Six trous borgnes 12 correspondent chacun respectivement à l'une des zones de connexion 11a, 11b, 11c et 11d, 11e ou 11f. Ces trous borgnes 12 ont un fond constitué par la face arrière des contacts 3, elle-même électriquement conductrice, mais il n'y a pas de connexion électrique entre les zones de connexion 11 et le fond des trous borgnes 12. Les trous borgnes sont disposés autour et à proximité de l'aire 18 destinée à être recouverte par la puce 17. Plus précisément, une distance de 150µ au maximum est ménagée entre le bord d'un trou borgne 12 et la puce 17, de manière à pouvoir connecter les bornes du circuit intégré 17 aux faces arrières des contacts 3 par un fil métallique (d'or par exemple) en minimisant la longueur de ces fils.

La figure 7 représente une zone agrandie de la figure 5. On y voit que l'antenne 9 est électriquement connectée (en fait en continuité) d'une part au niveau de l'une de ses extrémités, à la piste de connexion 10, par l'intermédiaire de laquelle elle est reliée électriquement à la zone de connexion 11g, et d'autre part, au niveau de l'autre de ses extrémités à la zone de connexion 11h mentionnée plus haut. On constate sur cette figure 7 que les zones de connexion 11h et 11g sont très proches de l'aire 18 destinée à être recouverte par la puce.

Dans le mode de réalisation illustré par les figures, l'antenne 9 est constituée d'une piste de cuivre très fine ayant une largeur l = 40 µm s'allongeant sur *n*=3 spires, avec une distance d = 30 µm entre deux spires consécutives. On a alors la relation *l* x *n* + *d* x (*n*-1)= 180 µm. D'une manière générale, conformément à l'invention on cherche à satisfaire la relation *l* x *n* + *d* x (*n*-1)= ≤ 250 µm, avec préférentiellement avec n≥1. Ainsi, la zone de connexion 11h, électriquement connectée à la spire la plus externe, est situé à une distance de l'aire 18 destinée à être recouverte par la puce 17, ce qui est bien conforme à l'inégalité indiquée ci-dessus, avec trois spires de l'antenne passant entre cette zone de connexion 11h et l'aire 18 destinée à être recouverte par la puce. Les spires de l'antenne 9 comportent une boucle 19 qui revient de la périphérie du module 2 vers l'aire 18 destinée à être recouverte par la puce. Cette boucle 19 est électriquement connectée à la zone de connexion 11g. Les deux extrémités de l'antenne 9 se trouvent donc respectivement connectées au niveau de plages de soudure, soit respectivement de la zone de connexion 11h (pour la spire la plus externe) et au niveau de la zone de connexion 11g (pour la spire la plus interne). Les zones de connexion 11g et 11h forment respectivement les bornes de sortie et d'entrée de l'antenne.

La puce 17 comporte des bornes de connexion sur sa face supérieure, c'est-à-dire sur sa face opposée à la face reposant sur le substrat 5. Ces bornes de connexion sont directement (sans passer par des trous métallisés) électriquement connectées aux faces arrière des contacts 3 avec des fils métalliques (or ou cuivre, par exemple) à travers les trous borgnes 12. Par ailleurs, les extrémités de l'antenne 9 sont connectées aussi directement avec des fils métalliques reliant des bornes de connexion aux zones de connexion 11g et 11h.

Grâce à l'invention, et notamment à la connexion directe par fils métalliques entre bornes de connexion de la puce et les contacts 3 de la face avant du module, il est possible de ne pas avoir à utiliser une technologie à trous métallisés avec plots de connexion avec la puce déportée. Ceci est particulièrement avantageux, car il peut être difficile de souder des fils métalliques sur de tels plots du fait de la rugosité de surface du cuivre à leur niveau.

Les fils métalliques reliant les bornes de connexion du circuit intégré (la puce) 17 aux faces arrières des contacts 3 ou aux extrémités de l'antenne 9 ont une longueur maximale de 500 µm. La rigidité et la longueur de ces fils de connexion, comparées à la hauteur du circuit intégré, sont alors telles qu'il n'y pas de risque qu'ils viennent court-circuiter les spires. Après connexion des fils de connexion au circuit intégré 17 d'une part, et aux faces arrières des contacts 3 ou aux zones de connexion 11h et 11g, d'autre part, l'ensemble de la face arrière du module est encapsulée par un procédé connu. Le module 2 peut alors être inséré dans une carte 1 telle que celle représentée sur la figure 1.

Les spires se situent pour leur majeure partie en périphérie du module, totalement en dehors de l'aire 18 destinée à être recouverte par la puce 17. Elles sont cependant totalement circonscrites à l'intérieur des dimensions définies par la norme ISO 7816-2.

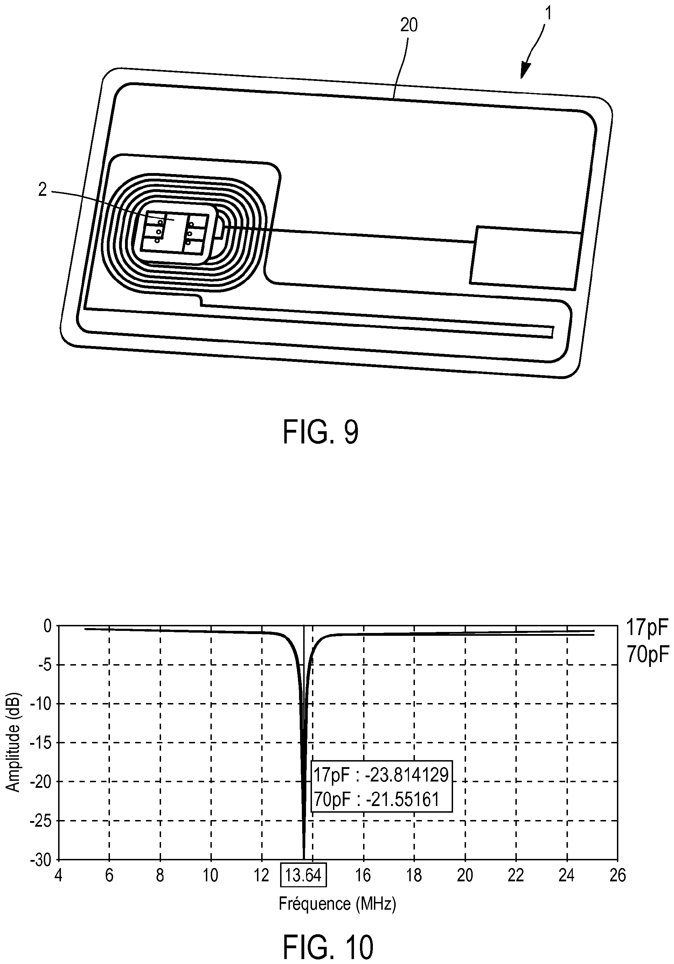

La figure 8 illustre la superposition des pistes métalliques des faces avant 4 et arrière 8. Sur cette figure, on peut voir que la majeure partie des spires de l'antenne 9, c'est-à-dire la portion des spires située en périphérie du module 2 se situe sous les portions des contacts 3 et des zones périphériques 7 comportant les ouvertures 6. Ainsi le flux magnétique généré dans ces spires ou par ces spires peut s'élever à travers les ouvertures 6 perpendiculairement au plan de chacune des spires ce qui permet d'assurer un meilleur couplage avec l'antenne booster 20 de la carte décrite en relation avec la figure 9.

Sur la figure 9, le corps de la carte est représenté en transparence de manière à faire apparaître l'antenne booster 20 intégrée dans celle-ci. Les antennes de module 9 et l'antenne booster 20 sont conçues pour pouvoir se coupler et communiquer entre elles lorsque le module 2 est intégré dans une carte à puce 1. L'antenne booster 20 a une forme et des dimensions appropriées pour communiquer sur de plus grandes distances que ne peut le faire l'antenne de module 9. Ainsi, la puce qui est connectée électriquement à l'antenne de module 9 peut échanger des informations avec un dispositif de lecture/écriture, sans contact, via l'antenne booster 20 elle-même couplée électromagnétiquement à l'antenne de module 9.

Les contacts 3 et l'antenne 9 forment une double interface de communication avec la puce 17.

Le graphe 10 représente deux courbes représentant la réponse électromagnétique émise respectivement soit par une puce ayant une capacitance de 17pF et soit par une puce ayant une capacitance de 70 pF, en fonction de la fréquence de résonance. Ce graphe est obtenu lorsque l'antenne de la carte booster 20 et la petite antenne du module, elle-même raccordée électriquement à la puce, se couplent électromagnétiquement. Il est ainsi montré que la fréquence de résonance de l'antenne est ajustée à environ 13,5 MHz (13,64 MHz plus précisément), avec une amplitude de signal similaire quelle que soit la capacitance de la puce (17pF et 70pF respectivement pour chacune des courbes).

Il est évidemment possible d'adapter les caractéristiques (largeur, épaisseur, longueur, nombre de spires, espacement entre les spires, matériau, etc.) de l'antenne 9, aux spécifications du circuit intégré 17.

## Revendications

1. Module électronique pour carte à circuit intégré, comportant un circuit intégré (17) et une double interface de communication avec la puce, cette interface comprenant elle-même au moins deux contacts (3) et une antenne (9),
le module (2) comprenant un circuit imprimé (5) ayant une face avant (4) et une face arrière (8) opposées l'une à l'autre, la face avant (4) supportant les contacts (3) et la face arrière (8) supportant l'antenne (9) et comprenant une zone (18) destinée à être recouverte par la puce (17),
l'antenne (9) comprenant au moins une spire réalisée sous forme d'une piste conductrice s'étendant totalement en dehors de la zone (18) destinée à être recouverte par la puce (17), entre deux extrémités, et
le module (2) étant **caractérisé par le fait que** l'extrémité de la spire la plus externe est située à une distance de la zone (18) destinée à être recouverte par la puce (17), inférieure à 250 µm et **par le fait qu'**au moins une spire de l'antenne (9) passe entre cette extrémité et la zone (18) du module destinée à recevoir la puce (17).

2. Module selon la revendication 1, dans lequel l'antenne (9) est constituée d'une piste de cuivre ayant une largeur *l*, s'allongeant sur *n* spires, avec une distance *d* entre deux spires consécutives, avec *l* x *n* + *d* x (*n*-1)= ≤ 250 µm et n≥1.

3. Module selon la revendication 2, dans lequel *l* est préférentiellement compris entre 30 et 70 µm et plus préférentiellement substantiellement égal à 40 µm, *n* est préférentiellement compris entre 1 et 6 spires et plus préférentiellement encore égal à 5 et *d* est préférentiellement compris entre 30 et 70 µm et plus préférentiellement substantiellement égal à 30 µm.

4. Module selon l'une des revendications précédentes, dans lequel le circuit imprimé (5) comprend des trous borgnes (12) ouverts sur la face arrière (8) et bouchés sur la face avant (4) par les contacts (3), la puce (17) étant connectée directement par des fils métalliques aux contacts (3), à travers les trous borgnes (12).

5. Module selon l'une des revendications précédentes, dans lequel l'antenne (9) est réalisée par gravure à travers un motif défini par photo-lithogravure d'une couche de cuivre préalablement électrodéposée.

6. Circuit imprimé pour la fabrication d'un module selon l'une des revendications précédentes, ayant une face avant (4) et une face arrière (8) opposées l'une à l'autre, la face avant (4) supportant des contacts (3) et la face arrière (8) supportant une antenne (9) et comprenant une zone (18) destinée à être recouverte par une puce (17), dans lequel
l'antenne (9) est constituée d'au moins une spire réalisée sous forme d'une piste conductrice s'étendant totalement en dehors de la zone (18) destinée à être recouverte par la puce (17), entre deux extrémités, l'extrémité de la spire la plus externe étant située à une distance de la zone (18) destinée à être recouverte par la puce (17), inférieure à 250 µm, et au moins une spire de l'antenne (9) passe entre cette extrémité et la zone destinée à recevoir la puce (17).

7. Circuit imprimé selon la revendication 6, dans lequel la zone (18) destinée à être recouverte par la puce (17) correspond à une aire directement située en surface de sa face arrière (8).

8. Circuit imprimé selon la revendication 6, dans lequel la zone (18) destinée à être recouverte par la puce (17) correspond à une cavité découpée dans son épaisseur.

## Patentansprüche

1. Elektronisches Modul für eine Chipkarte, umfassend eine integrierte Schaltung (17) und eine doppelte Kommunikationsschnittstelle mit dem Chip, wobei diese Schnittstelle selbst mindestens zwei Kontakte (3) und eine Antenne (9) umfasst,
wobei das Modul (2) eine gedruckte Schaltung (5) mit einer Vorderseite (4) und einer Rückseite (8), die einander gegenüberliegen, umfasst, wobei die Vorderseite (4) die Kontakte (3) trägt und die Rückseite (8) die Antenne (9) trägt, und umfassend eine Zone (18), die dazu bestimmt ist, von dem Chip (17) bedeckt zu werden,
wobei die Antenne (9) mindestens eine Windung umfasst, die in Form einer leitenden Spur ausgeführt ist, die sich zur Gänze außerhalb der Zone (18), die dazu bestimmt ist, mit dem Chip (17) bedeckt zu werden, zwischen zwei Enden erstreckt, und
wobei das Modul (2) **dadurch gekennzeichnet ist, dass** das Ende der äußersten Windung in einem Abstand zu der Zone (18), die dazu bestimmt ist, mit dem Chip (17) bedeckt zu werden, von weniger als 250 µm angeordnet ist, und dass mindestens eine Windung der Antenne (9) zwischen diesem Ende und der Zone (18) des Moduls, die dazu bestimmt ist, mit dem Chip (17) bedeckt zu werden, verläuft.

2. Modul nach Anspruch 1, bei dem die Antenne (9) von einer Kupferspur mit einer Breite *l* gebildet ist, die sich auf *n* Windungen längs erstreckt, mit einem Abstand d zwischen zwei aufeinanderfolgenden Windungen, wobei *l x n* + *d x (n-1)* ≤ *250 µm* und n ≥ 1.

3. Modul nach Anspruch 2, bei dem *l* vorzugsweise zwischen 30 und 70 µm beträgt und weiter bevorzugt im Wesentlichen gleich 40 µm ist, *n* vorzugsweise zwischen 1 und 6 Windungen beträgt und noch weiter bevorzugt gleich 5 ist, und *d* vorzugsweise zwischen 30 und 70 µm beträgt und weiter bevorzugt im Wesentlichen gleich 30 µm ist.

4. Modul nach einem der vorhergehenden Ansprüche, bei dem die gedruckte Schaltung (5) Blindlöcher (12) umfasst, die auf der Rückseite (8) offen und auf der Vorderseite (4) durch die Kontakte (3) verschlossen sind, wobei der Chip (17) direkt durch Metalldrähte an die Kontakte (3) durch die Blindlöcher (12) angeschlossen ist.

5. Modul nach einem der vorhergehenden Ansprüche, bei dem die Antenne (9) durch Gravur über ein definiertes Motiv durch Photolithografie einer vorher elektrisch abgeschiedenen Kupferschicht hergestellt wird.

6. Gedruckte Schaltung für die Herstellung eines Moduls nach einem der vorhergehenden Ansprüche mit einer Vorderseite (4) und einer Rückseite (8), die einander gegenüberliegen, wobei die Vorderseite (4) die Kontakte (3) trägt und die Rückseite (8) eine Antenne (9) trägt, und umfassend eine Zone (18), die dazu bestimmt ist, von einem Chip (17) bedeckt zu werden,
wobei die Antenne (9) aus mindestens einer Windung gebildet ist, die in Form einer leitenden Spur ausgeführt ist, die sich zur Gänze außerhalb der Zone (18), die dazu bestimmt ist, mit dem Chip (17) bedeckt zu werden, zwischen zwei Enden erstreckt, wobei das Ende der äußersten Windung in einem Abstand zu der Zone (18), die dazu bestimmt ist, mit dem Chip (17) bedeckt zu werden, von weniger als 250 µm angeordnet ist, und
mindestens eine Windung der Antenne (9) zwischen diesem Ende und der Zone, die dazu bestimmt ist, mit dem Chip (17) bedeckt zu werden, verläuft.

7. Gedruckte Schaltung nach Anspruch 6, bei der die Zone (18), die dazu bestimmt ist, mit dem Chip (17) bedeckt zu werden, einem Bereich entspricht, der sich direkt auf der Oberfläche ihrer Rückseite (8) befindet.

8. Gedruckte Schaltung nach Anspruch 6, bei der die Zone (18), die dazu bestimmt ist, mit dem Chip (17) bedeckt zu werden, einem in seiner Dicke ausgeschnittenen Hohlraum entspricht.

## Claims

1. Electronic module for an integrated circuit card, comprising an integrated circuit (17) and a dual communication interface with the chip, this interface itself comprising at least two contacts (3) and an antenna (9),
the module (2) comprising a printed circuit (5) having a front face (4) and a rear face (8) opposite one another, the front face (4) supporting the contacts (3) and the rear face (8) supporting the antenna (9) and comprising a zone (18) intended to be covered by the chip (17),
the antenna (9) comprising at least one turn produced in the form of a conducting track extending totally outside the zone (18) intended to be covered by the chip (17), between two ends, and
the module (2) being **characterized by** the fact that the end of the outermost turn is situated at a distance from the zone (18) intended to be covered by the chip (17), less than 250 µm and by the fact that at least one turn of the antenna (9) passes between this end and that zone (18) of the module which is intended to receive the chip (17).

2. Module according to Claim 1, in which the antenna (9) consists of a copper track having a width ℓ, stretching over *n* turns, with a distance *d* between two consecutive turns, with ℓ x *n* + *d* x (*n* - 1)= ≤ 250 µm and n ≥ 1.

3. Module according to Claim 2, in which ℓ is preferably between 30 and 70 µm and more preferably substantially equal to 40 µm, *n* is preferably between 1 and 6 turns and more preferably still equal to 5 and *d* is preferably between 30 and 70 µm and more preferably substantially equal to 30 µm.

4. Module according to one of the preceding claims, in which the printed circuit (5) comprises blind holes (12) open on the rear face (8) and plugged on the front face (4) by the contacts (3), the chip (17) being connected directly by metallic wires to the contacts (3), through the blind holes (12).

5. Module according to one of the preceding claims, in which the antenna (9) is produced by etching through a pattern defined by photo-engraving of a copper layer previously electrodeposited.

6. Printed circuit for the fabrication of a module according to one of the preceding claims, having a front face (4) and a rear face (8) opposite one another, the front face (4) supporting contacts (3) and the rear face (8) supporting an antenna (9) and comprising a zone (18) intended to be covered by a chip (17), in which the antenna (9) consists of at least one turn produced in the form of a conducting track extending totally outside the zone (18) intended to be covered by the chip (17), between two ends, the end of the outermost turn being situated at a distance from the zone (18) intended to be covered by the chip (17), less than 250 µm , and
at least one turn of the antenna (9) passes between this end and the zone intended to receive the chip (17).

7. Printed circuit according to Claim 6, in which the zone (18) intended to be covered by the chip (17) corresponds to an area situated directly at the surface of its rear face (8).

8. Printed circuit according to Claim 6, in which the zone (18) intended to be covered by the chip (17) corresponds to a cavity cut in its thickness.
